# EUROPEAN PATENT APPLICATION

(11) **EP 3 599 495 A1**
(43) Date of publication of application: **29.01.2020**
(21) Application number: 18447001.1
(22) Date of filing: 24.07.2018
(51) Int. Cl.: G02B 27/01, G03B 21/00

(54) **COLLIMATED VISUAL DISPLAY SYSTEM**

(71) Applicant: ScioTeq BVBA, 8500 Kortrijk (BE)
(72) Inventor: DE MEERLEER, Peter, 9160 Lokeren (BE); BUSSCHAERT, Pieter-Jan, 8800 Roeselare (BE); LOBELLE, David, 8840 Staden (BE); NONQUE, Gaetan, 8560 Wevelgem (BE); VAN HOORNICK, Tim, 8370 Blankenberge (BE)
(74) Representative: Beck, Michaël Andries T.

(57) **Abstract**

The present invention provides a back-projection screen, a spherical mirror reflecting an image on the back-projection screen to be viewed by a viewer located in the design eye point, wherein the back-projection screen is configured to provide a collimated beam to a viewer located in the design eye point, characterized in that a single projector illuminates the back-projection screen to provide the image on the back-projection screen, a freeform mirror located between the back-projection screen and the projector is configured to map all the pixels of the projector to the back-projection screen such that the resolution of the projector is sufficiently uniform on the back-projection screen.

## Description

### Field of the Invention

The present invention relates to a collimated visual display system using a single projector to illuminate the entire field of view through an optical warping mirror, and to a method of designing a freeform mirror.

### Description of Prior Art

Large collimated displays having a collimating mirror with a radius in the range of 7ft to 12ft are widely used in simulation applications. These mirrors generate virtual out of the window images for pilots and co-pilots of aircrafts when multiple people (Pilot and co-pilot...) are in the cockpit (as opposed to aircraft with only 1 person in the cockpit). These virtual images surround the pilot/co-pilot and appear to be coming from far out through the collimating action of the collimating mirror. As the image is sufficiently collimated, the pilot and the co-pilot see virtually the same image from a different eye point just like they would in the actual aircraft.

These large collimated displays traditionally use a film based mirror with a back projection or front projection screen (that is typically spherical or toroid) on which the image is formed by multiple projectors (3 to 5).

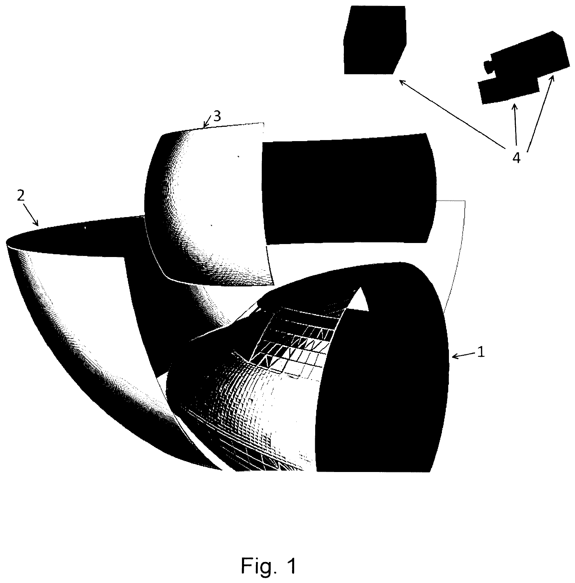

A projection system according to the prior art is illustrated in Figure 1. The group of projectors **4** illuminates a toroid or spherical back projection screen **3** which, with the collimating mirror **2,** generates an image for the pilot and/or copilot in the cockpit **1.** These projectors **4** are projecting straight on the screen or by reflection on flat mirrors and thus have limitations in the way the projector pixels are mapped on the screen. This has the effect of reducing the resolution efficiency of the projectors which is why multiple projectors are required to obtain a sufficiently high resolution in the system. As multiple projectors are used, they also need to be perfectly aligned with respect to each other to create a continuous and smooth image. The images of two adjacent projectors have to be overlapped by blending mechanisms that make the image in the blend zones fuzzy. These overlapping zones need to be illuminated by two adjacent projectors which is also causing a drop-in resolution efficiency. As different projector units typically have a different brightness and color point, they need to be matched so the user has the impression to look at a single image rather than an image with a varying brightness and a projector channel to projector channel varying color point. Additionally, individual projector units tend to vary in brightness and color point over their lifetime which introduces the need for projector re-adjustment activities that are costly and cause training interruption.

There is a need for improvement in the art.

### SUMMARY OF THE INVENTION

It is an advantage of the present invention to provide a collimated visual display system comprising
- a back-projection screen,
- a spherical mirror reflecting an image on the back-projection screen to be viewed by a viewer located in the design eye point,
- wherein the back-projection screen is configured to provide a collimated-beam to a viewer located in the design eye point, characterized in that
- a single projector illuminates the back-projection screen to provide the image on the back-projection screen,
- a freeform mirror located between the back-projection screen and the projector is configured to map all the pixels of the projector to the back-projection screen such that the resolution of the projector is sufficiently uniform on the back-projection screen.

Advantageously, the collimated visual display system of the present invention requires the use of only one projector to achieve a better resolution than the collimated visual displays of the prior art. It is an advantage that a better field of view and a better resolution uniformity throughout the field of view are also achieved.

Advantageously, the freeform mirror that redistributes the pixels of the projector over the entire back projection screen. This distribution of pixels happens in the most optimal way and thereby allows to meet both the field of view and high-resolution requirement.

Preferably, the resolution from the design eyepoint is at least 6 arcmin/OLP after reflection on the back-projection screen and on the spherical mirror.

Advantageously, the resolution of the projector is considered to be sufficiently uniform when the resolution remains within ±10% of the target resolution. As the target resolution is preferably 6 arcmin per OLP, wherein this value is the maximum, the resolution should be 5.4 ±10% = 5.4 ± 0.6 arcmin / OLP.

The resolution is usually calculated in arcmin/pixel or in arcmin/(optical line pair), an optical line pair being equivalent to two lines when one line is black and one line is white (the relationship between alternating black and white lines or pixels is often described as a line pair.). Note that the smaller this value, the better the resolution is. With the collimated display according to the present invention, a resolution better than 6 arcmin per optical line pair can be achieved. Such a resolution is important to provide realistic conditions to a pilot and/or co-pilot training with the display according to the present invention.

Preferably, the back-projection screen is convergence optimized for a user in the design eye point.

Advantageously, the back-projection screen is optimized such that the collimated visual display system of the present invention is suitable for two pilots, the design eye point being between the position of the two pilots and the distance between the two pilots being at least 1 meter, preferably at least 135 cm.

Preferably, the back-projection screen is a freeform, spherical or aspherical transparent screen.

Preferably, the resolution of the projector is of at least 2560 x 1200 pixels.

Preferably, the spherical mirror has a radius in the range of 7 feet to 12 feet.

Preferably, the back-projection screen is coated with a diffusing coating.

Preferably, the back-projection screen is configured to provide a collimated image with a horizontal field of view of 180°, a vertical field of view of at least 40°.

Preferably, the spherical mirror is manufactured with a large piece of metalized film that is skinned over a cavity where under pressure is introduced through which the metalized film is sucked into a sufficiently spherical shape.

Preferably, the spherical mirror is a segmented mirror made of a plurality of glass spherical mirror segments.

Preferably, the spherical mirror is a segmented mirror made of a plurality of plastic or polymeric spherical mirror segments.

It is an advantage of the present invention that with the collimated visual display system described above, the viewers (pilot and/or co-pilot located in the pilot and co-pilot eye point) look at the spherical mirror and see reflected in the spherical mirror an image of a back-projection screen. A single projector illuminates the back-projection screen through reflection on a freeform mirror in such a way that the horizontal field of view seen from the design eye point (and the pilot and co-pilot eye point) is at least 180°, the vertical field of view seen from the design eye point is at least 40° and that the resolution as seen from the design eye point is at least 6 arcminutes per OLP.

Because only one projector is used, the system can be more cost effective and requires less maintenance because there is no longer need for regular adjustment to match the projectors and to maintain the overlap zone.

The present invention also pertains to a method for designing a freeform mirror for a collimated visual display system, wherein the method comprises the steps of
a) providing initial values comprising a projector position, a projector orientation, a back-projection screen position, orientation and shape,
b) providing fixed parameters, said fixed parameters comprising a projector resolution,
c) defining a reference point on a freeform mirror,
d) defining a mapping function between pixels of the projector and a target point on the back-projection screen,
e) defining a normal vector parametric representation of a freeform surface,
f) optimizing the normal vectors of the freeform surface such that the reflection on the freeform surface of a light ray coming from each pixel of the projector reaches the target point on the back-projection screen, until the optimized freeform surface has been reached,
g) repeating step f) until the freeform surface provides a target resolution uniformity on the back-projection screen and a target field of view within a predefined tolerance,
h) measuring the astigmatism of the reflected light rays hitting the back-projection surface and comparing the measured value with a threshold,
i) if the astigmatism is higher than the threshold, repeating steps e) to h),
j) if the astigmatism is lower than the threshold, storing the representation of the freeform surface at step g).

The freeform mirror designed with the method described above provides all the advantages such as the improved field of view, improved resolution, and improved resolution uniformity in the collimated visual display system described above.

Additionally, the method can be used to also provide an optical design of a collimated visual display system according to the present invention by providing an optimal position and orientation for the freeform mirror, an optimal position and orientation for the projector, an optimal position and orientation for the back-projection screen in the optical layout of the visual display system.

Advantageously, the present invention also pertains to a collimated visual display system comprising a freeform mirror obtained with the above method for designing a freeform mirror.

Further benefits and advantages of the present invention will become apparent after a careful reading of the detailed description with appropriate reference to the accompanying drawings.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a perspective view of a conventional collimated system in accordance with the prior art.
Fig. 2 is a perspective view of a collimated system in accordance with a preferred embodiment according to the present invention.

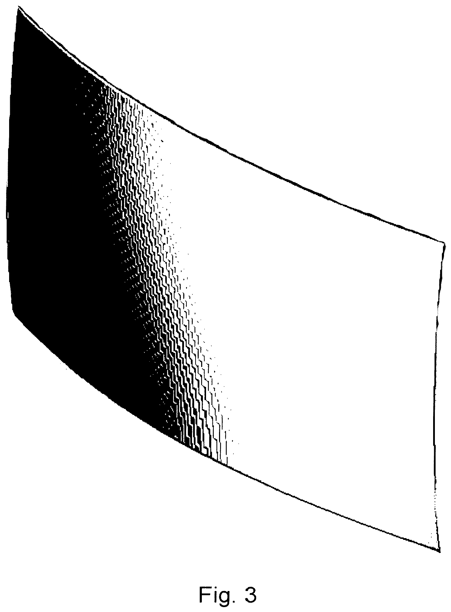

Fig. 3 is a perspective view of a freeform optical warping mirror shown on Figure 2 in accordance with the present invention.
Fig. 4 is a schematic view of the optical layout showing the uniform resolution according to the present invention.
Fig. 5 is a flowchart for the optimization of the design of the freeform surface according to the present invention.
Fig. 6 is a perspective view of a freeform collimation optimized back projection screen according to the present invention.

### DEFINITION

**Design eye point** The design eye point is the ideal position in which the eyes of the user are to be during use of the collimated visual display system. The collimated visual display system is thus optimized for the design eye point. The design eye point is in practice typical in the middle between the Pilot eye point (PEP) and the co-pilot eyepoint (CPEP). All requirements for the system optimized for the design eye point are also met in the PEP and CPEP.

**OLP or Optical Line Pair** is a pair of straight parallel lines of equal width and having a defined degree of contrast, and which are used as means of determining the resolution of a display. The resolution can be measured in arcmin/pixel or in arcmin/OLP. The resolution measured per OLP is twice the resolution measured per pixel.

### DETAILED DESCRIPTION OF THE INVENTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The terms "about" or "approximate" or "sufficiently" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

Reference will now be made to the drawing figures to describe the present invention in detail.

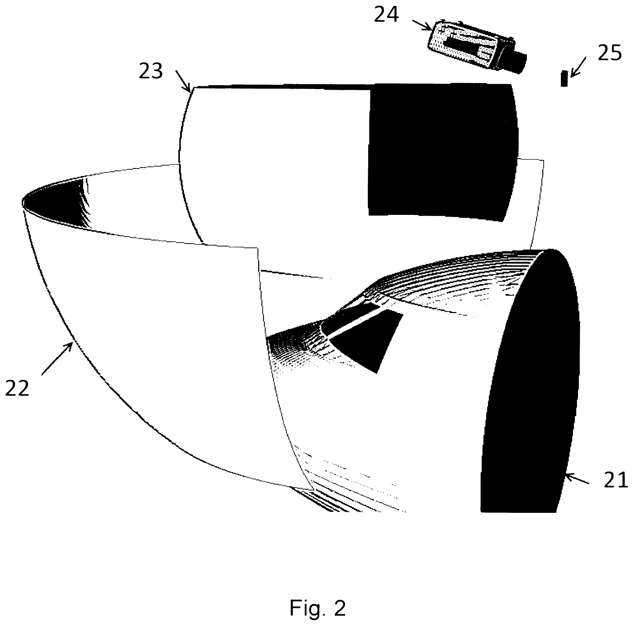

Figure 2 illustrates a collimated visual display system according to the present invention.

A single projector **24** illuminates a freeform mirror **25.** The projector is preferably a high-resolution projector with a resolution of at least 2560x1200 pixels.

The freeform mirror **25** redistributes the pixels of the projector **24** on a back-projection screen **23.** The shape of the freeform mirror **25** is adapted to redistribute uniformly the pixels of the projector **24** over the entire back-projection screen **23** so as to generate the required field of view and provide the high resolution of the projector to the viewer.

The single projector illuminates the back-projection screen **23** through reflection on the freeform mirror **25** in such a way that the horizontal field of view seen from the design eye point is at least 180°, the vertical field of view seen from the design eye point is at least 40° and the resolution as seen from the design eye point is at least 6 arcminutes per OLP.

The back-projection screen **23** is preferably a transparent spherical or aspherical or freeform substrate coated with a diffusing coating.

The image on the back-projection screen **23** is then reflected by a spherical mirror **22** towards at least one viewer in the design eye point.

In embodiments of the present invention, the spherical mirror **22** has a radius in the range of 7ft to 12ft, or about 2 meters to 4 meters. This spherical mirror **22** can be manufactured by using a large piece of metalized film that is skinned over a cavity where under-pressure is introduced. Because of the "under-pressure" the metalized film is sucked into a substantially spherical shape. Alternative methods to construct this mirror consist of bringing a number of spherical glass or plastic spherical segments together to create the large spherical mirror. Because of the spherical shape, all segments can be identical.

Viewers in the cockpit **21** look at the spherical mirror **22** and see reflected in the spherical mirror **22** an image of the back-projection screen **23,** said image being collimated to the viewers.

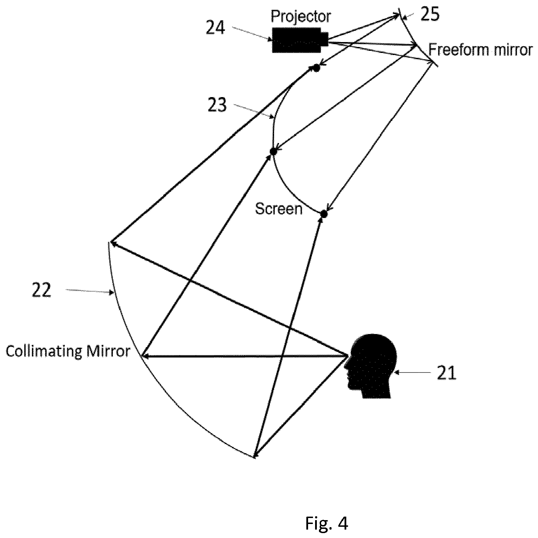

The shape of the back-projection screen **23** is obtained in such a way that the parallel rays from the two eyes of a person in the design eye point of the visual display system, after reflection on the spherical mirror **22,** converge on the back-projection screen **23** surface, as illustrated with the arrows on Figure 4. This ensures the collimation property of the visual system. The shape of the back-projection screen is preferably optimized for providing a collimated beam to a pilot and a co-pilot.

This method is convergence optimized and creates an aspherical or freeform shape of the back-projection screen for the required field of view that warrants good convergence and collimation performance of the visual system in the design eye point and for Pilot Eye Point (PEP) and the Co-Pilot Eye Point (CPEP)

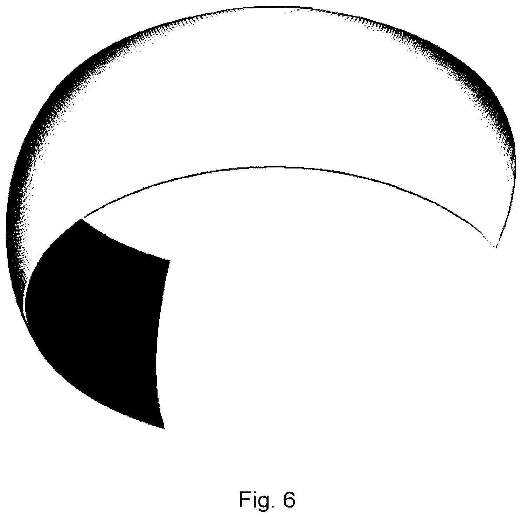

Figure 6 illustrates a back-projection screen according to the present invention. The shape of the screen can be aspherical or a freeform and is designed so as to optimize the collimation of light emitted by the projector towards the at least one viewer.

In order to obtain the desired resolution and field of view in the design eye point, the freeform mirror **25** is designed in such a way that it maps the projector **24** pixels on at least a portion of the back-projection screen **23** in a sufficiently equidistant manner so as to optimize the resolution and resolution uniformity over the entire back projection screen **23.**

This mapping is further also illustrated on Figure 4, which shows the mapping of the projector **24** pixels onto the back-projection screen **23** by the freeform mirror **25.** It also illustrates the mapping of the eyes of the viewer **21** in the design eye point on the back-projection screen **23** by the collimating mirror **22.**

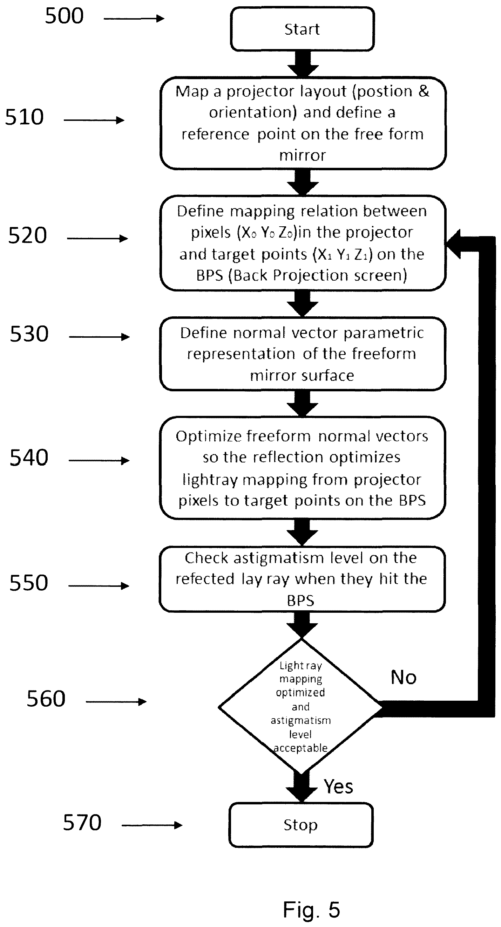

The present invention also pertains to a method of designing a freeform mirror for a visual display system as described above. The flow-diagram of the algorithm to design the freeform mirror in accordance with the present invention is illustrated in the flow chart of Figure 5. The method is iterative and uses input parameters having an initial value at the start (step **500**) of the method. The method is stopped when target values have been reached within a pre-determined threshold.

The input parameters to the method according to the present invention are
- the projector characteristics as the resolution, an initial position, aspect ratio, an initial orientation,
- the characteristics of the back-projection surface which is precalculated/pre-designed to optimize the collimation of the light beam in the design eye point, i.e. its shape, position, etc.
- an initial position for the freeform mirror, and an initial shape for the freeform mirror which can be for example a flat surface.

In step **510,** the projector layout (position and orientation) is mapped on a freeform mirror to define a reference point of the freeform mirror, for example its center.

In step **520,** a mapping between pixel coordinates in the projector and corresponding target points coordinates on the back-projection screen is defined. This mapping thus takes into account the resolution of the projector as each pixel is mapped. This mapping ensures that the target resolution uniformity is achieved on the back-projection screen and also that the target field of view is reached. The target resolution uniformity, the target resolution and the target field of view are pre-defined and need to be reached within a pre-determined threshold. The target value for the resolution is for example 6 arcmin per OLP. The target resolution uniformity is for example a resolution throughout the field of view which remains within ±10% of a target value.

In step **530,** a normal vector parametric representation of the freeform mirror surface is defined with unknown parameters which are to be calculated in the next step, iteratively. The normal vector representation of the freeform surface allows to optimize the direction of reflection of the light rays when reflected by the freeform mirror.

In step **540,** a freeform mirror surface calculation is performed by optimizing the normal vector parametric representation of the freeform mirror such that a light ray coming from each pixel of the projector reflected by the freeform reaches the target point on the back-projection screen, defined by the mapping in step **520,** in other words, it optimizes the light ray mapping from projector pixels coordinates to the target points on the back-projection surface. This step can be repeated iteratively until the target values, as the target field of view and the target resolution uniformity are reached within a certain threshold.

It is important to note that it is not only the shape of the freeform mirror which can be modified at each iteration of the method but also the other parameters provided as input to the method, such as the orientation and position of the projector, the position of the freeform mirror and the orientation of the freeform mirror.

The freeform mirror as output by the method can be in the form of a point cloud and then be transformed to a continuous shape.

In step **550,** the astigmatism of the reflected light rays hitting the back-projection surface is measured.

The measurement of the astigmatism can be evaluated by calculating the difference between the horizontal and vertical curvature of each point on the freeform mirror.

In step **560,** if the measured astigmatism is higher than a threshold (not acceptable), then steps from **520** on are repeated, if the measured astigmatism is lower than a threshold (acceptable), then the algorithm is stopped, and the latest representation of the freeform surface as determined in step **540** defines the freeform surface. This freeform surface also optimizes the light ray mapping from the pixels of the projector to their projection on the back-projection screen.

If the other parameters have been updated in step **540,** these parameters are also stored as the new values for the optical design of the display.

In step **570** the method is stopped and guarantees a freeform mirror which provides a target field of view and a target resolution uniformity in a collimated visual display system according to the present invention.

Because only one projector is used, the system can be more cost effective and requires less maintenance because there is no longer a need for regular adjustments of the projectors to ensure their color points match, etc. and to align the projectors to maintain the overlap zone.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A collimated visual display system comprising
- a back-projection screen,
- a spherical mirror reflecting an image on the back-projection screen to be viewed by a viewer located in the design eye point,
- wherein the back-projection screen is configured to provide a collimated beam to a viewer located in the design eye point, **characterized in that**
- a single projector illuminates the back-projection screen to provide the image on the back-projection screen,
- a freeform mirror located between the back-projection screen and the projector is configured to map all the pixels of the projector to the back-projection screen such that the resolution of the projector is sufficiently uniform on the back-projection screen.

2. Collimated visual display system according to claim 1, wherein the resolution from the design eyepoint is at least 6 arcmin/OLP after reflection on the back-projection screen and on the spherical mirror.

3. Collimated visual display system according to claim 1, wherein the back-projection screen is convergence optimized for a user in the design eye point.

4. Collimated visual display system according to any of the preceding claims wherein the back-projection screen is a freeform, spherical or aspherical transparent screen.

5. Collimated visual display system according to any of the preceding claims, wherein the resolution of the projector is of at least 2560 x 1200 pixels.

6. Collimated visual display system according to any of the preceding claims wherein the spherical mirror has a radius in the range of 7 feet to 12 feet.

7. Collimated visual display system according to any of the preceding claims wherein the back-projection screen is coated with a diffusing coating.

8. Collimated visual display system according to any of the preceding claims, wherein the back-projection screen and spherical mirror are configured to provide a collimated image with a horizontal field of view of 180°, a vertical field of view of at least 40°.

9. Collimated visual display system according to any of the preceding claims, wherein the spherical mirror is manufactured with a large piece of metalized film that is skinned over a cavity where under pressure is introduced through which the metalized film is sucked into a sufficiently spherical shape.

10. Collimated visual display system according to any of claims 1 to 9, wherein the spherical mirror is a segmented mirror made of a plurality of glass spherical mirror segments.

11. Collimated visual display system according to any of claims 1 to 9, wherein the spherical mirror is a segmented mirror made of a plurality of plastic or polymeric spherical mirror segments.

12. Collimated visual display system according to any of the preceding claims wherein the freeform mirror is obtained with the method of claim 13.

13. A method to design a freeform mirror for a collimated visual display system according to any of claims 1 to 11, wherein the method comprises the steps of
a) providing initial values comprising a projector position, a projector orientation, a back-projection screen position, orientation and shape,
b) providing fixed parameters, said fixed parameters comprising a projector resolution,
c) defining a reference point on a freeform mirror,
d) defining a mapping function between pixels of the projector and a target point on the back-projection screen,
e) defining a normal vector parametric representation of a freeform surface,
f) optimizing the normal vectors of the freeform surface such that the reflection on the freeform surface of a light ray coming from each pixel of the projector reaches the target point on the back-projection screen, until the optimized freeform surface has been reached,
g) repeating step f) until the freeform surface provides a target resolution uniformity on the back-projection screen and a target field of view within a predefined tolerance,
h) measuring the astigmatism of the reflected light rays hitting the back-projection surface and comparing the measured value with a threshold,
i) if the astigmatism is higher than the threshold, repeating steps e) to h),
j) if the astigmatism is lower than the threshold, storing the representation of the freeform surface at step g).
